(19) Europäisches Patentamt
European Patent Office
Office européen des brevets

(11) EP 2 532 518 B1

(12) **EUROPEAN PATENT SPECIFICATION**

(45) Date of publication and mention of the grant of the patent:
**17.01.2018 Bulletin 2018/03**

(21) Application number: **11739842.0**

(22) Date of filing: **03.02.2011**

(51) Int Cl.:
***B32B 27/36*** *(2006.01)* ***B05D 7/04*** *(2006.01)*
***B32B 27/18*** *(2006.01)* ***C08J 7/06*** *(2006.01)*
***C09D 5/16*** *(2006.01)* ***C09D 7/12*** *(0000.00)*
***C09D 5/24*** *(2006.01)* ***C08J 7/04*** *(2006.01)*
***B32B 27/40*** *(2006.01)* ***B32B 27/30*** *(2006.01)*

(86) International application number:
**PCT/JP2011/052292**

(87) International publication number:
**WO 2011/096494 (11.08.2011 Gazette 2011/32)**

(54) **LAMINATED POLYESTER FILM**

LAMINIERTER POLYESTERFILM

FILM DE POLYESTER STRATIFIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.02.2010 JP 2010024916**

(43) Date of publication of application:
**12.12.2012 Bulletin 2012/50**

(73) Proprietor: **Mitsubishi Chemical Corporation**
**Tokyo (JP)**

(72) Inventors:
- **KAWASAKI, Taishi**
**Maibara-shi**
**Shiga 521-0234 (JP)**
- **FUJITA, Masato**
**Maibara-shi**
**Shiga 521-0234 (JP)**

(74) Representative: **Ter Meer Steinmeister & Partner**
**Patentanwälte mbB**
**Nymphenburger Straße 4**
**80335 München (DE)**

(56) References cited:
**EP-A1- 0 951 991**
**EP-A2- 0 235 926**
**JP-A- 2004 074 682**
**JP-A- 2005 082 784**
**JP-A- 2006 218 448**
**JP-A- 2008 132 618**
**JP-A- 2009 214 360**
**JP-A- 2010 013 550**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 532 518 B1

## Description

### TECHNICAL FIELD

The present invention relates to a laminated polyester film, and more particularly, to a laminated polyester film which is suitably used as a member for micro-lens sheets, prism sheets, light diffusion sheets, touch panels or the like employed in a backlight unit of liquid crystal displays, etc., and has good easy-slip property and anti-sticking property.

### BACKGROUND ART

In recent years, liquid crystal displays have been extensively used as a display device for TVs, personal computers, digital cameras, cellular phones, etc. The liquid crystal displays have no light-emitting function by themselves. Therefore, liquid crystal displays of the type in which light is irradiated from a backside thereof using a backlight have now come to dominate.

For the purpose of improving an optical efficiency of the backlight to enhance a brightness of liquid crystal displays, there have been used various optical sheets such as a micro-lens sheet, a prism sheet and a light diffusion sheet. In these optical sheets, in order to impart an easy-slip property and an anti-sticking property thereto, a back coat layer has been generally provided on the surface of the respective sheets which is opposed to the surface on which a micro-lens layer, a prism layer, a light diffusion layer or the like is formed. The back coat layer generally has a thickness of about 1 to about 15 $\mu$m, and is formed by applying a coating solution prepared by mixing particles having a particle diameter of about 1 to about 30 $\mu$m and a binder resin with a large amount of an organic solvent by an off-line coating method (Patent Documents 1 and 2).

In recent years, for the purpose of reducing environmental burdens, there is an increasing necessity or demand for reducing an amount of carbon dioxide discharged. For this reason, it becomes important to suppress use of organic solvents. Further, owing to recent considerable price cutting of liquid crystal displays, it has also been demanded to achieve considerable reduction in costs required in steps for processing the respective optical sheets. However, since the above back coat layer has been formed by an off-line coating method as described above, there occurs such a problem that the number of production steps is increased, and therefore the costs for production of these sheets are increased.

### Prior Documents

#### Patent Documents

Patent Document 1: Japanese Patent Application Laid-Open (KOKAI) No. 2004-4598
Patent Document 2: Japanese Patent Application Laid-Open (KOKAI) No. 2007-286166

### SUMMARY OF THE INVENTION

#### Problems to be Solved by the Invention

The present invention has been accomplished to solve the above conventional problems. An object of the present invention is to provide a laminated polyester film which is produced by an in-line coating method using an aqueous system, can exhibit good easy-slip property, anti-sticking property and antistatic property, and can be suitably used, for example, as a member for micro-lens sheets, prism sheets or light diffusion sheets employed in a backlight unit of liquid crystal displays, etc.

#### Means for Solving Problems

As a result of the present inventors' earnest study in view of the above problems, it has been found that the above problems can be readily solved by using a laminated polyester film having a specific structure. The present invention has been attained on the basis of this finding.

That is, according to the present invention, there is provided a laminated polyester film comprising a polyester film, a first coating layer formed on one surface of the polyester film which comprises a resin and an antistatic agent of a polymer type but comprises substantially no particles, and has a variation in height of not less than 0.04 urn as measured over the coating layer by using a laser microscope "OLS-3000" manufactured by OLYMPUS Corp., with an objective

lens having a magnification of x 100 times to measure a variation in height between a crest and a trough on the surface of the first coating layer by step-measuring analysis, and a second coating layer formed on the other surface of the polyester film which comprises a resin, wherein the antistatic agent of a polymer type is a quaternary ammonium salt having a number-average molecular weight of 1,000 to 500,000, and wherein the first coating layer and the second coating layer respectively comprise a crosslinking agent.

## EFFECT OF THE INVENTION

In accordance with the present invention, there can be provided a laminated polyester film which is excellent in easy-slip property, anti-sticking property and antistatic property. Therefore, the present invention has a high industrial value.

## PREFERRED EMBODIMENTS FOR CARRYING OUT THE INVENTION

The present invention will be described in detail below.

The polyester film constituting the laminated polyester film of the present invention may have either a single layer structure or a multilayer structure. Unless departing from the scope of the present invention, the polyester film may have not only a two or three layer structure but also a four or more multilayer structure, and the layer structure of the polyester film is not particularly limited.

The polyester used in the present invention may be either a homopolyester or a copolyester. The homopolyester is preferably obtained by polycondensing an aromatic dicarboxylic acid and an aliphatic glycol. Examples of the aromatic dicarboxylic acid include terephthalic acid and 2,6-naphthalenedicarboxylic acid. Examples of the aliphatic glycol include ethylene glycol, diethylene glycol and 1,4-cyclohexanedimethanol. Typical examples of the polyesters include polyethylene terephthalate or the like. On the other hand, as a dicarboxylic acid component of the copolyester, there may be mentioned one or more compounds selected from the group consisting of isophthalic acid, phthalic acid, terephthalic acid, 2,6-naphthalenedicarboxylic acid, adipic acid, sebacic acid and oxycarboxylic acids (such as, for example, p-oxybenzoic acid). As a glycol component of the polyester, there may be mentioned one or more compounds selected from the group consisting of ethylene glycol, diethylene glycol, propylene glycol, butanediol, 4-cyclohexanedimethanol and neopentyl glycol.

For the main purposes of imparting an easy-slip property to the film and preventing occurrence of flaws in the film, particles are preferably compounded in the polyester layer in the film of the present invention. The kind of particles to be compounded in the polyester layer is not particularly limited, and any particles may be used as long as the particles are capable of imparting a good easy-slip property to the film. Specific examples of the particles include particles of silica, calcium carbonate, magnesium carbonate, barium carbonate, calcium sulfate, calcium phosphate, magnesium phosphate, kaolin, aluminum oxide, titanium oxide, etc. In addition, there may also be used heat-resistant organic particles as described in Japanese Patent Publication (KOKOKU) No. 59-5216, Japanese Patent Application Laid-Open (KOKAI) No. 59-217755 or the like. Examples of the other heat-resistant organic particles include particles of thermosetting urea resins, thermosetting phenol resins, thermosetting epoxy resins, benzoguanamine resins, etc. Further, there may also be used deposited particles obtained by precipitating and finely dispersing a part of metal compounds such as a catalyst during the process for production of the polyester.

On the other hand, the shape of the particles used in the polyester layer is also not particularly limited, and may be any of a spherical shape, a massive shape, a bar shape, a flat shape, etc. Further, the hardness, specific gravity, color and the like of the particles are also not particularly limited. These particles may be used in combination of any two or more kinds thereof, if required.

The average particle diameter of the particles used in the polyester layer is usually in the range of 0.01 to 3 $\mu$m and preferably 0.1 to 2 $\mu$m. When the average particle diameter of the particles is less than 0.01 $\mu$m, the particles may fail to impart a sufficient easy-slip property to the polyester layer, or tend to be aggregated together and therefore exhibit a poor dispersibility therein, which will cause deterioration in transparency of the resulting film. On the other hand, when the average particle diameter of the particles is more than 3 $\mu$m, the obtained film tends to have an excessively coarse surface roughness, thereby causing problems in the subsequent steps upon forming a functional layer such as a prism layer and a light diffusion layer on the polyester layer.

The content of the particles in the polyester layer is usually in the range of 0.001 to 5% by weight and preferably 0.005 to 3% by weight. When the content of the particles in the polyester layer is less than 0.001% by weight, the resulting film tends to be insufficient in easy-slip property. On the other hand, when the content of the particles in the polyester layer is more than 5% by weight, the resulting film tends to be insufficient in transparency.

The method of adding the particles to the polyester layer is not particularly limited, and any conventionally known methods can be suitably used therefor. For example, the particles may be added at any optional stages in the process for production of the polyester forming the respective layers. The particles are preferably added to the polyester

after completion of the esterification reaction or transesterification reaction.

In addition, there may also be used the method of blending a slurry of the particles prepared by dispersing the particles in ethylene glycol or water with the raw polyester material using a vented kneading extruder, the method of blending the dried particles with the raw polyester material using a kneading extruder, or the like.

Meanwhile, the polyester film used in the present invention may also comprise, in addition to the above particles, known additives such as an antioxidant, an antistatic agent, an ultraviolet absorber, a thermal stabilizer, a lubricant, a dye, a pigment, etc., if required.

The thickness of the polyester film used in the present invention is not particularly limited, and the polyester film may have any thickness as long as it can be formed with a suitable film shape. The thickness of the polyester film is usually in the range of 10 to 350 $\mu$m and preferably 50 to 250 $\mu$m.

Next, an example of the process of producing the polyester film used in the present invention is more specifically explained, although not particularly limited thereto. That is, in the production process, there is preferably used such a method in which the above-mentioned raw polyester material is extruded from a die in the form of a molten sheet, and the molten sheet is cooled and solidified on a cooling roll to obtain an unstretched sheet. In this case, in order to enhance a flatness of the obtained sheet, it is preferred to enhance adhesion between the sheet and the rotary cooling drum. For this purpose, an electrostatic adhesion method and/or a liquid coating adhesion method are preferably used. Next, the thus obtained unstretched sheet is biaxially stretched. In such a case, the unstretched sheet is first stretched in one direction thereof using a roll-type or tenter-type stretching machine. The stretching temperature is usually 70 to 120°C and preferably 80 to 110°C, and the stretch ratio is usually 2.5 to 7 times and preferably 3.0 to 6 times. Next, the thus stretched film is stretched in the direction perpendicular to the stretching direction of the first stage. In this case, the stretching temperature is usually 70 to 170°C, and the stretch ratio is usually 3.0 to 7 times and preferably 3.5 to 6 times. Successively, the resulting biaxially stretched sheet is heat-treated at a temperature of 180 to 270°C under a tension or relaxation within 30% to obtain a biaxially oriented film. Upon the above stretching steps, there may also be used the method in which the stretching in each direction is carried out in two or more stages. In such a case, the multi-stage stretching is preferably performed such that the stretch ratio in each of the two directions is finally fallen within the above-specified range.

Also, upon producing the polyester film constituting the laminated polyester film according to the present invention, there may also be used a simultaneous biaxial stretching method. The simultaneous biaxial stretching method is such a method in which the above unstretched sheet is stretched and oriented in both of the machine and width directions at the same time while maintaining the sheet in a suitable temperature-controlled condition at a temperature of usually 70 to 120°C and preferably 80 to 110°C. The stretch ratio used in the simultaneous biaxial stretching method is 4 to 50 times, preferably 7 to 35 times and more preferably 10 to 25 times in terms of an area ratio of the sheet to be stretched. Successively, the obtained biaxially stretched sheet is heat-treated at a temperature of 170 to 250°C under a tension or relaxation within 30% to obtain a stretched oriented film. As the apparatus used in the above simultaneous biaxial stretching method, there may be employed those stretching apparatuses of any conventionally known types such as a screw type stretching apparatus, a pantograph type stretching apparatus and a linear drive type stretching apparatus.

Next, the method of forming the coating layers constituting the laminated polyester film according to the present invention is explained. The respective coating layers are formed by an in-line coating method in which the surface of the polyester film is subjected to coating treatment during the stretching step of the polyester film. In the in-line coating method, since the coating layer can be produced simultaneously with formation of the polyester film, costs required for production thereof can be suppressed. Further, since these coating layers can be treated at high-temperature conditions, it is possible to produce a film which can be suitably used as the polyester film in the present invention.

For example, in the case of a sequential biaxial stretching, the in-line coating treatment may be carried out, in particular, after completion of the longitudinal stretching but before initiation of the lateral stretching, although not particularly limited thereto.

In the present invention, it is essentially required that a coating layer comprising substantially no particles but comprising a resin and an antistatic agent and having a variation in height of not less than 0.04 $\mu$m as measured over the coating layer (hereinafter occasionally referred to merely as a "first coating layer") is formed on one surface of the polyester film, and a coating layer comprising a resin (hereinafter occasionally referred to merely as a "second coating layer") is formed on the other surfaces of the polyester film.

The first coating layer used in the present invention is a back coat layer provided for the purpose of imparting an easy-slip property, an anti-sticking property and an antistatic property to the polyester film, whereas the second coating layer used in the present invention acts for enhancing an adhesion property to an optical functional layer such as a micro-lens layer, a prism layer and a light diffusion layer.

As the resin contained in each of the first coating layer and the second coating layer, there may be used conventionally known resins. Examples of the resin include polyester resins, acrylic resins and urethane resins.

The polyester resin used in the present invention may be constituted, for example, from the following polycarboxylic acid and polyvalent hydroxy compound as main components. That is, examples of the polycarboxylic acid used

for production of the polyester resin include terephthalic acid, isophthalic acid, orthophthalic acid, phthalic acid, 4,4'-diphenyldicarboxylic acid, 2,5-naphthalenedicarboxylic acid, 1,5-naphthalenedicarboxylic acid, 2,6-naphthalenedicarboxylic acid, 2,7-naphthalenedicarboxylic acid, 1,4-cyclohexanedicarboxylic acid, 2-potassium sulfo-terephthalic acid, 5-sodium sulfoisophthalic acid, adipic acid, azelaic acid, sebacic acid, dodecanedicarboxylic acid, glutaric acid, succinic acid, trimellitic acid, trimesic acid, pyromellitic acid, trimellitic anhydride, phthalic anhydride, p-hydroxybenzoic acid, trimellitic acid monopotassium salt and ester-forming derivatives thereof. Examples of the polyvalent hydroxy compound used for production of the polyester resin include ethylene glycol, 1,2-propylene glycol, 1,3-propylene glycol, 1,3-propanediol, 1,4-butanediol, 1,6-hexanediol, 2-methyl-1,5-pentanediol, neopentyl glycol, 1,4-cyclohexane dimethanol, p-xylylene glycol, adducts of bisphenol A and ethylene glycol, diethylene glycol, triethylene glycol, polyethylene glycol, polypropylene glycol, polytetramethylene glycol, polytetramethylene oxide glycol, dimethylol propionic acid, glycerol, trimethylol propane, sodium dimethylol ethyl sulfonate and potassium dimethylol propionate. One or more polycarboxylic acids and one or more polyvalent hydroxy compounds may be respectively appropriately selected from these compounds and subjected to polycondensation reaction by an ordinary method to synthesize the polyester resin as aimed.

The acrylic resin used in the present invention is in the form of a polymer obtained from a polymerizable monomer having a carbon-to-carbon double bond such as, typically, an acrylic monomer and a methacrylic monomer. The polymer may be either a homopolymer or a copolymer. The polymer may also include a copolymer of the polymer and the other polymer (such as, for example, a polyester and a polyurethane). Examples of the copolymer include a block copolymer and a graft copolymer. In addition, the polymer may also include a polymer obtained by polymerizing the polymerizable monomer having a carbon-to-carbon double bond in a polyester solution or a polyester dispersion (which may also be in the form of a mixture of the polymers). Further, the polymer may also include a polymer obtained by polymerizing the polymerizable monomer having a carbon-to-carbon double bond in a polyurethane solution or a polyurethane dispersion (which may also be in the form of a mixture of the polymers). Similarly, the polymer may also include a polymer obtained by polymerizing the polymerizable monomer having a carbon-to-carbon double bond in the other polymer solution or the other polymer dispersion (which may also be in the form of a mixture of the polymers). In addition, in the case where it is required to reduce a refractive index of the respective coating layers, a fluorine atom may be incorporated thereinto. Also, in the case where it is required to further enhance an adhesion property of these coating layers, a functional group such as a hydroxyl group and an amino group may be incorporated thereinto.

The above polymerizable monomer having a carbon-to-carbon double bond is not particularly limited. Examples of the typical compounds as the polymerizable monomer include various carboxyl group-containing monomers such as acrylic acid, methacrylic acid, crotonic acid, itaconic acid, fumaric acid, maleic acid and citraconic acid, and salts thereof; various hydroxyl group-containing monomers such as 2-hydroxyethyl (meth)acrylate, 2-hydroxypropyl (meth)acrylate, 4-hydroxybutyl (meth)acrylate, monobutylhydroxyl fumarate and monobutylhydroxyl itaconate; various (meth)acrylic acid esters such as methyl (meth)acrylate, ethyl (meth)acrylate, propyl (meth)acrylate, butyl (meth)acrylate and lauryl (meth)acrylate; various nitrogen-containing compounds such as (meth)acrylamide, diacetone acrylamide, N-methylol acrylamide and (meth)acrylonitrile; various styrene derivatives such as styrene, $\alpha$-methyl styrene, divinyl benzene and vinyl toluene; various vinyl esters such as vinyl propionate; various silicon-containing polymerizable monomers such as $\gamma$-methacryloxypropyl trimethoxysilane and vinyl trimethoxysilane; various phosphorus-containing vinyl-based monomers; various halogenated vinyl-based monomers such as vinyl chloride and vinylidene chloride; and various conjugated dienes such as butadiene.

The urethane resin used in the present invention is a high-molecular compound having a urethane bond in a molecule thereof. The urethane resin is usually produced by the reaction between a polyol and an isocyanate. Examples of the polyol include polycarbonate polyols, polyester polyols, polyether polyols, polyolefin polyols and acrylic polyols. These compounds may be used alone or in combination of any two or more thereof.

The polycarbonate polyols may be obtained by subjecting a polyhydric alcohol and a carbonate compound to dealcoholization reaction. Examples of the polyhydric alcohol include ethylene glycol, 1,2-propylene glycol, 1,3-propylene glycol, 1,2-butanediol, 1,3-butanediol, 1,4-butanediol, 1,5-pentanediol, 1,6-hexanediol, 1,4-cyclohexanediol, 1,4-cyclohexane dimethanol, 1,7-heptanediol, 1,8-octanediol, 1,9-nonanediol, 1,10-decanediol, neopentyl glycol, 3-methyl-1,5-pentanediol and 3,3-dimethylol heptane. Examples of the carbonate compound include dimethyl carbonate, diethyl carbonate, diphenyl carbonate and ethylene carbonate. Examples of the polycarbonate polyols obtained by the reaction between the above compounds include poly(1,6-hexylene)carbonate and poly(3-methyl-1,5-pentylene)carbonate.

Examples of the polyester polyols include those produced by reacting a polycarboxylic acid (such as malonic acid, succinic acid, glutaric acid, adipic acid, pimelic acid, suberic acid, sebacic acid, fumaric acid, maleic acid, terephthalic acid and isophthalic acid) or an acid anhydride thereof with a polyhydric alcohol (such as ethylene glycol, diethylene glycol, triethylene glycol, propylene glycol, dipropylene glycol, tripropylene glycol, butanediol, 1,3-butanediol, 1,4-butanediol, 2,3-butanediol, 2-methyl-1,3-propanediol, 1,5-pentanediol, neopentyl glycol, 1,6-hexanediol, 3-methyl-1,5-pentanediol, 2-methyl-2,4-pentanediol, 2-methyl-2-propyl-1,3-propanediol, 1,8-octanediol, 2,2,4-trimethyl-1,3-pentanediol, 2-ethyl-1,3-hexanediol, 2,5-dimethyl-2,5-hexanediol, 1,9-nonanediol, 2-methyl-1,8-octanediol, 2-butyl-2-ethyl-1,3-propanediol, 2-butyl-2-hexyl-1,3-propanediol, cyclohexanediol, bishydroxymethylcyclohexane, dimethanol benzene, bishydroxyethoxybenzene, alkyl dialkanol amines and lactonediol).

Examples of the polyether polyols include polyethylene glycol, polypropylene glycol, polyethylene/propylene glycol, polytetramethylene ether glycol and polyhexamethylene ether glycol.

Examples of a polyisocyanate compound used for producing the urethane resin include aromatic diisocyanates such as tolylene diisocyanate, xylylene diisocyanate, methylene diphenyl diisocyanate, phenylene diisocyanate, naphthalene diisocyanate and tolidine diisocyanate; aromatic ring-containing aliphatic diisocyanates such as $\alpha,\alpha,\alpha',\alpha'$-tetramethyl xylylene diisocyanate; aliphatic diisocyanates such as methylene diisocyanate, propylene diisocyanate, lysine diisocyanate, trimethyl hexamethylene diisocyanate and hexamethylene diisocyanate; and alicyclic diisocyanates such as cyclohexane diisocyanate, methyl cyclohexane diisocyanate, isophorone diisocyanate, dicyclohexylmethane diisocyanate and isopropylidene dicyclohexyl diisocyanate. These polyisocyanate compounds may be used alone or in combination of any two or more thereof.

When the urethane resin is synthesized, there may be used a chain extender. The chain extender is not particularly limited, and any chain extender may be used as long as it has two or more active groups capable of reacting with an isocyanate group. In general, there may be mainly used such a chain extender having two hydroxyl groups or two amino groups.

Examples of the chain extender having two hydroxyl groups include glycols, e.g., aliphatic glycols such as ethylene glycol, propylene glycol and butanediol; aromatic glycols such as xylylene glycol and bishydroxyethoxybenzene; and ester glycols such as neopentyl glycol hydroxypivalate. Examples of the chain extender having two amino groups include aromatic diamines such as tolylenediamine, xylylenediamine and diphenylmethanediamine; aliphatic diamines such as ethylenediamine, propylenediamine, hexanediamine, 2,2-dimethyl-1,3-propanediamine, 2-methyl-1,5-pentanediamine, trimethyl hexanediamine, 2-butyl-2-ethyl-1,5-pentanediamine, 1,8-octanediamine, 1,9-nonanediamine and 1,10-decanediamine; and alicyclic diamines such as 1-amino-3-aminomethyl-3,5,5-trimethyl cyclohexane, dicyclohexylmethanediamine, isopropylidenecyclohexyl-4,4'-diamine, 1,4-diaminocyclohexane and 1,3-bisaminomethyl cyclohexane.

The urethane resin used in the present invention may be dispersed or dissolved in a solvent as a medium, and is preferably dispersed or dissolved in water as the medium. In order to disperse or dissolve the urethane resin in water, there may be used those urethane resins of a forcibly emulsifiable type which can be dispersed and dissolved using an emulsifier, or those urethane resins of a self-emulsifiable type or a water-soluble type which are obtained by introducing a hydrophilic group into urethane resins, etc. Among these urethane resins, in particular, self-emulsifiable type urethane resins which are ionomerized by introducing an ionic group into a skeleton of urethane resins are preferred because they are excellent in storage stability of the coating solution as well as water resistance, transparency and adhesion property of the resulting coating layer. Examples of the ionic group to be introduced into the urethane resins include various groups such as a carboxyl group, a sulfonic acid group, a phosphoric acid group, a phosphonic acid group and a quaternary ammonium salt group. Among these ionic groups, preferred is a carboxyl group. As the method of introducing a carboxyl group into the urethane resin, there may be used various methods which may be carried out in respective stages of the polymerization reaction. For example, there may be used the method in which a carboxyl group-containing resin is used as a comonomer component upon synthesis of a prepolymer, or the method in which a carboxyl group-containing component is used as one component of the polyol, the polyisocyanate, the chain extender and the like. In particular, there is preferably used the method in which a carboxyl group-containing diol is used to introduce a desired amount of a carboxyl group into the urethane resins by suitably adjusting an amount of the diol component charged. For example, the diol used in the polymerization for production of the urethane resin may be copolymerized with dimethylol propionic acid, dimethylol butanoic acid, bis-(2-hydroxyethyl)propionic acid, bis-(2-hydroxyethyl)butanoic acid, etc. In addition, the carboxyl group thus introduced is preferably formed into a salt thereof by neutralizing the carboxyl group with ammonia, amines, alkali metals, inorganic alkalis, etc. Among these compounds used for the neutralization, especially preferred are ammonia, trimethylamine and triethylamine. When using such a polyurethane resin, the carboxyl group thereof from which the neutralizing agent is removed in the drying step after the coating step may be used as a crosslinking reaction site which can be reacted with other crosslinking agents. As a result, the above-described urethane resin is excellent in stability when preserved in the form of a solution before being coated, and further the coating layer obtained therefrom can be further improved in durability, solvent resistance, water resistance, anti-blocking property, etc.

The first coating layer used in the present invention is provided for the purpose of enhancing a brightness of an optical film when the coating layer is formed in the optical film. The coating layer is preferably formed of a polyester resin, an acrylic resin or a urethane resin from the standpoint of a good appearance of the resulting coating layer. Further, since the optical film desirably has a high total light transmittance, the resin to be contained in the coating layer is preferably designed to have a low refractive index. For this reason, among the above resins, preferred are the acrylic resin and the urethane resin, and more preferred is the acrylic resin.

The second coating layer used in the present invention is provided for enhancing an adhesion property to an optical functional layer such as a micro-lens layer, a prism layer and a light diffusion layer, and preferably comprises any of a polyester resin, an acrylic resin and a urethane resin form the standpoint of a good appearance of the resulting

coating layer. In order to further enhance the adhesion property, it is more preferred that the second coating layer comprise an acrylic resin or a urethane resin. In particular, when forming a micro-lens layer or a prism layer, the second coating layer preferably comprises a urethane resin from the standpoint of enhancing an adhesion property thereto. Among the urethane resins, especially preferred are those urethane resins produced from polycarbonate polyols.

The content of the resin in the first coating layer is usually 10 to 80% by weight, preferably 20 to 70% by weight and more preferably 40 to 65% by weight. Whereas, the content of the resin in the second coating layer is usually 20 to 90% by weight and preferably 30 to 80% by weight. When the content of the resin in the first coating layer is out of the above-specified range, the resulting coating layer tends to be deteriorated in appearance or tends to exhibit a low total light transmittance. When the content of the resin in the second coating layer is out of the above-specified range, the resulting coating layer tends to be deteriorated in adhesion property.

The antistatic agent used in the present invention serves for reducing a surface resistivity of the resulting film. Antistatic agents of a polymer type are used because of good heat resistance and wet heat resistance thereof. The antistatic agents of a polymer type are quaternary ammonium salt compounds.

The quaternary ammonium salt compounds are compounds comprising a quaternary ammonium salt in a molecule thereof. Examples of the quaternary ammonium salt compounds include pyrrolidinium ring-containing compounds, quaternarized products of alkyl amines, copolymers obtained by copolymerizing these compounds with acrylic acid or methacrylic acid, quaternarized products of N-alkylaminoacrylamides, vinyl benzyl trimethyl ammonium salts and 2-hydroxy-3-methacryloxypropyl trimethyl ammonium salts. These compounds may be used in combination with each other or in combination with the other resins. Examples of the anion as a counter ion of these quaternary ammonium salts include a halogen ion, a sulfonate ion, a phosphate ion, a nitrate ion, an alkyl sulfonate ion and a carboxylate ion.

Among the above quaternary ammonium salt compounds, from the standpoints of excellent antistatic performance and heat-resistant stability, preferred are the pyrrolidinium ring-containing compounds.

Examples of the pyrrolidinium ring-containing compounds include those polymers having such a structure as represented by the following formula (1).

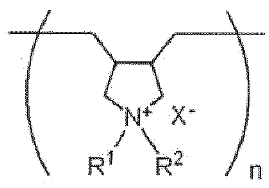

(1)

In the above formula (1), $R^1$ and $R^2$ are each independently an alkyl group, a phenyl group or the like with the proviso that the alkyl group, the phenyl group or the like may be substituted with the following substituent group. Examples of the substituent group with which the alkyl group, the phenyl group or the like may be substituted, include a hydroxyl group, an amide group, an ester group, an alkoxy group, a phenoxy group, a naphthoxy group, a thioalkoxy group, a thiophenoxy group, a cycloalkyl group, a trialkyl ammonium alkyl group, a cyano group and halogens. In addition, $R^1$ and $R^2$ may be chemically bonded with each other. Examples of $R^1$ and $R^2$ include $-(CH_2)_m-$ in which m is an integer of 2 to 5, $-CH(CH_3)CH(CH3)-$, -CH=CH-CH=CH-, - CH=CH-CH=N-, -CH=CH-N=C-, $-CH_2OCH_2-$ and $-(CH_2)_2O(CH_2)_2-$. In the formula (1), $X^-$ is a halogen ion, a sulfonate ion, a phosphate ion, a nitrate ion, an alkyl sulfonate ion and a carboxylate ion.

In the present invention, the polymer represented by the above formula (1) may be obtained by subjecting a compound represented by the following formula (2) to ring opening polymerization using a radical polymerization catalyst. The polymerization may be carried out by a known method in a solvent such as water or a polar solvent such as methanol, ethanol, isopropanol, formamide, dimethyl formamide, dioxane and acetonitrile in the presence of a polymerization initiator such as hydrogen peroxide, benzoyl peroxide and tertiary butyl peroxide, although not particularly limited thereto. In the present invention, as a comonomer component of the above polymer, there may also be used a compound having a carbon-to-carbon unsaturated bond which is polymerizable with the compound represented by the following formula (2).

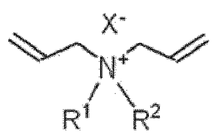

(2)

Also, the number-average molecular weight of the quaternary ammonium salt compound is 1000 to 500000, preferably 2000 to 100000 and more preferably 5000 to 50000. Such quaternary ammonium salt compounds are described in Japanese Patent Application Laid-Open (KOKAI) No. 2005-82784. When the number-average molecular weight of the quaternary ammonium salt compound is less than 1000, the resulting coating film tends to have a poor strength or tends to be deteriorated in heat-resistant stability. On the other hand, when the number-average molecular weight of the quaternary ammonium salt compound is more than 500000, the resulting coating solution tends to exhibit an excessively high viscosity and tends to be deteriorated in handling property and coatability.

The content of the antistatic agent in the first coating layer used in the present invention is usually in the range of 1 to 50% by weight, preferably 10 to 40% by weight and more preferably 20 to 30% by weight. When the content of the antistatic agent in the first coating layer is less than 1% by weight, the resulting coating layer tends to be insufficient in antistatic property, so that there tends to occur deposition of dusts on the coating layer, or the resulting film tends to be deteriorated in workability owing to sticking thereof. On the other hand, when the content of the antistatic agent in the first coating layer is more than 50% by weight, the resulting coating layer may fail to exhibit sufficient coating surface appearance.

The first coating layer preferably comprises a releasing agent for the purpose of enhancing an abrasion resistance and a slip property thereof. Examples of the releasing agent include waxes, fluorine compounds, long-chain alkyl compounds and silicones.

The waxes are those waxes selected from natural waxes, synthetic waxes and mixtures of these waxes. Examples of the natural waxes include vegetable waxes, animal waxes, mineral waxes and petroleum waxes. Specific examples of the vegetable waxes include candelilla waxes, carnauba waxes, rice waxes, haze waxes and jojoba oils. Specific examples of the animal waxes include beeswaxes, lanolin and spermaceti waxes. Specific examples of the mineral waxes include montan waxes, ozokerite and ceresin. Specific examples of the petroleum waxes include paraffin waxes, microcrystalline waxes and petrolatum. Specific examples of the synthetic waxes include synthetic hydrocarbons, modified waxes, hydrogenated waxes, fatty acids, acid amides, amines, imides, esters and ketones. As the synthetic hydrocarbons, there are well known Fischer-Tropsch waxes (alias: Sasol Wax), polyethylene waxes or the like. In addition, those polymers having a low molecular weight (specifically, those polymers having a viscosity number-average molecular weight of 500 to 20000) are also included in the synthetic hydrocarbons. Specific examples of the synthetic hydrocarbons include polypropylene, ethylene-acrylic acid copolymers, polyethylene glycol, polypropylene glycol, and blocked or grafted combined products of polyethylene glycol and polypropylene glycol. Specific examples of the modified waxes include montan wax derivatives, paraffin wax derivatives and microcrystalline wax derivatives. The derivatives as used herein mean compounds obtained by subjecting waxes to any treatment selected from refining, oxidation, esterification and saponification, or combination of these treatments. Specific examples of the hydrogenated waxes include hardened castor oils and hardened castor oil derivatives.

The preferred fluorine compounds are those compounds comprising a fluorine atom therein. From the standpoint of good coating surface properties of the resulting coating layer, among these fluorine compounds, organic fluorine compounds are preferably used. Examples of the organic fluorine compounds include perfluoroalkyl group-containing compounds, polymers of fluorine atom-containing olefin compounds, and aromatic fluorine compounds such as fluorobenzene. In view of good heat resistance and anti-staining property upon transferring, among these fluorine compounds, preferred are high-molecular compounds.

The long-chain alkyl compounds are those compounds comprising a linear or branched alkyl group having 6 or more carbon atoms and especially preferably having 8 or more carbon atoms. Specific examples of the long-chain alkyl compounds include long-chain alkyl group-containing polyvinyl resins, long-chain alkyl group-containing acrylic resins, long-chain alkyl group-containing polyester resins, long-chain alkyl group-containing amine compounds, long-chain alkyl group-containing ether compounds and long-chain alkyl group-containing quaternary ammonium salts, although not particularly limited thereto. In view of good heat resistance and anti-staining property upon transferring, among these long-chain alkyl compounds, preferred are high-molecular compounds.

The silicones are those compounds having a silicone structure in a molecule thereof. Examples of the silicones include silicone emulsions, acryl-grafted silicones, silicone-grafted acrylic compounds, amino-modified silicones, perfluoroalkyl-modified silicones and alkyl-modified silicones. In view of good heat resistance and anti-staining property upon transferring, among these silicones, preferred are those silicones comprising hardened silicone resins.

These releasing agents may be used alone or in combination of any two or more thereof. Among these releasing agents, the waxes are more suitably used because they can impart a good slip property to the coating layer even when used in a small amount.

The content of the releasing agent in the first coating layer is usually not more than 50% by weight, preferably 1 to 20% by weight and more preferably 3 to 10% by weight. When the content of the releasing agent in the first coating layer is more than 50% by weight, the resulting coating layer tends to be deteriorated in coating surface properties.

Further, in the first coating layer and the second coating layer, a crosslinking agent is used in combination with the above components for the purposes of strengthening the respective coating films and increasing a variation in height of the resulting coating layer, etc. Examples of the crosslinking agent include melamine compounds, epoxy compounds, oxazoline compounds, isocyanate compounds, carbodiimide compounds and metal coupling agents.

The melamine compounds are those compounds having a melamine skeleton therein. Examples of the melamine compounds include alkylolated melamine derivatives, partially or completely etherified compounds obtained by reacting the alkylolated melamine derivative with an alcohol, and a mixture of these compounds. Examples of the alcohol suitably used for the above etherification include methyl alcohol, ethyl alcohol, isopropyl alcohol, n-butanol and isobutanol. The melamine compound may be either a monomer or a dimer or higher polymer, or may be in the form of a mixture thereof. In addition, there may also be used those compounds obtained by subjecting a urea or the like to co-condensation with a part of melamine. Further, a catalyst may also be used to enhance a reactivity of the melamine compounds.

As the epoxy compounds, there may be used those compounds having an epoxy group in a molecule thereof, and prepolymers and cured products of the compounds. Examples of the epoxy compounds include condensates of epichlorohydrin with a hydroxyl group of ethylene glycol, polyethylene glycol, glycerol, polyglycerol, bisphenol A, etc., or an amino group. Specific examples of the epoxy compounds include polyepoxy compounds, diepoxy compounds, monoepoxy compounds and glycidyl amine compounds. Examples of the polyepoxy compounds include sorbitol polyglycidyl ether, polyglycerol polyglycidyl ether, pentaerythritol polyglycidyl ether, diglycerol polyglycidyl ether, triglycidyl tris(2-hydroxyethyl)isocyanate, glycerol polyglycidyl ether and trimethylolpropane polyglycidyl ether. Examples of the diepoxy compounds include neopentyl glycol diglycidyl ether, 1,6-hexanediol diglycidyl ether, resorcin diglycidyl ether, ethylene glycol diglycidyl ether, polyethylene glycol diglycidyl ether, propylene glycol diglycidyl ether, polypropylene glycol diglycidyl ether and polytetramethylene glycol diglycidyl ether. Examples of the monoepoxy compounds include allyl glycidyl ether, 2-ethylhexyl glycidyl ether and phenyl glycidyl ether. Examples of the glycidyl amine compounds include N,N,N',N'-tetraglycidyl-m-xylylenediamine and 1,3-bis(N,N-diglycidylamino)cyclohexane.

Examples of the oxazoline compounds include those compounds having an oxazoline group in a molecule thereof. Especially preferred are polymers having an oxazoline group which may be in the form of a homopolymer of an addition-polymerizable oxazoline group-containing monomer or a copolymer of the addition-polymerizable oxazoline group-containing monomer with the other monomer. Examples of the addition-polymerizable oxazoline group-containing monomer include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline and 2-isopropenyl-5-ethyl-2-oxazoline. These oxazoline compounds may be used alone or in the form of a mixture of any two or more thereof. Among these oxazoline compounds, 2-isopropenyl-2-oxazoline is more preferred because of industrial availability thereof. The other monomers used in the copolymer are not particularly limited as long as they are monomers which are copolymerizable with the addition-polymerizable oxazoline group-containing monomer. Examples of the other monomers include (meth)acrylic acid esters such as alkyl (meth)acrylates (in which the alkyl group may be methyl, ethyl, n-propyl, isopropyl, n-butyl, isobutyl, t-butyl, 2-ethylhexyl or cyclohexyl); unsaturated carboxylic acids such as acrylic acid, methacrylic acid, itaconic acid, maleic acid, fumaric acid, crotonic acid, styrenesulfonic acid and salts thereof (such as sodium salts, potassium salts, ammonium salts and tertiary amine salts); unsaturated nitriles such as acrylonitrile and methacrylonitrile; unsaturated amides such as (meth)acrylamide, N-alkyl (meth)acrylamides and N,N-dialkyl (meth)acrylamides (in which the alkyl group may be methyl, ethyl, n-propyl, isopropyl, n-butyl, isobutyl, t-butyl, 2-ethylhexyl or cyclohexyl); vinyl esters such as vinyl acetate and vinyl propionate; vinyl ethers such as methyl vinyl ether and ethyl vinyl ether; $\alpha$-olefins such as ethylene and propylene; halogen-containing $\alpha,\beta$-unsaturated monomers such as vinyl chloride, vinylidene chloride and vinyl fluoride; and $\alpha,\beta$-unsaturated aromatic monomers such as styrene and $\alpha$-methyl styrene. These other monomers may be used alone or in combination of any two or more thereof.

The content of the crosslinking agent in the first coating layer is usually 1 to 50% by weight and preferably 5 to 30% by weight. The content of the crosslinking agent in the second coating layer is usually 5 to 70% by weight and preferably 15 to 50% by weight. When the content of the crosslinking agent in the first coating layer is out of the above-specified range, the resulting first coating layer tends to be deteriorated in anti-blocking property. When the content of the crosslinking agent in the second coating layer is out of the above-specified range, the resulting second coating layer tends to be deteriorated in adhesion property.

In order to improve an anti-blocking property and a slipping property of the resulting coating layer, the second coating layer may comprise particles. Examples of the particles used in the second coating layer include inorganic particles such as silica, alumina and metal oxides, and organic particles such as crosslinked polymer particles.

Further, the first coating layer and the second coating layer may also respectively comprise various additives such as a defoaming agent, a coatability improver, a thickening agent, an organic lubricant, an ultraviolet absorber, an antioxidant, a foaming agent, a pigment and a dye, if required, unless the subject matter of the present invention is adversely affected by addition thereof.

The analysis of various components contained in each of the first coating layer and the second coating layer may be conducted, for example, by surface analysis such as TOF-SIMS.

The first coating layer comprises substantially no particles. That is, substantially no particles which tend to have a possibility of inhibiting a stability of a coating solution for the first coating layer used in the present invention are included in the first coating layer.

The term "comprising substantially no particles" means that the particles are not used to design the coating

layer. For example, in the case of inorganic particles, when the quantitative determination of inorganic elements is conducted by fluorescent X-ray analysis, the amount of the respective inorganic elements in the coating layer is not more than 50 ppm, preferably not more than 10 ppm and more preferably below a detection limit thereof. This is because even if no particles are positively added to the coating layer, there is a possibility that contaminant components derived from foreign matters are included in the coating layer.

The variation in height of the first coating layer is not less than 0.04 $\mu$m and preferably in the range of 0.05 to 0.20 $\mu$m. When the variation in height of the first coating layer is less than 0.04 $\mu$m, the resulting first coating layer may fail to exhibit a sufficient easy-slip property and a sufficient anti-sticking property.

In the present invention, it is assumed that the coating layers are produced by an in-line coating method. That is, the laminated polyester film is preferably produced by the procedure in which a series of the above-mentioned compounds are respectively formed into an aqueous solution or a water dispersion to prepare a coating solution whose solid concentration is adjusted to about 0.1 to about 50% by weight, and the resulting coating solution is applied onto a polyester film. In addition, the coating solution may also comprise a small amount of an organic solvent for the purpose of improving a dispersibility in water and a film-forming property, etc., unless the subject matter of the present invention is adversely affected. In the coating solution, the organic solvents may be used alone or appropriately in combination of any two or more thereof.

In the laminated polyester film according to the present invention, the coating amount of the first coating layer formed on the polyester film is usually in the range of 0.03 to 1.0 g/m$^2$, preferably 0.05 to 0.5 g/m$^2$ and more preferably 0.07 to 0.2 g/m$^2$. When the coating amount of the first coating layer is less than 0.03 g/m$^2$, the particles are more likely to be desorbed therefrom. When the coating amount of the first coating layer is more than 1.0 g/m$^2$, the resulting first coating layer tends to be deteriorated in appearance. On the other hand, the coating amount of the second coating layer formed on the polyester film is usually in the range of 0.002 to 1.0 g/m$^2$, preferably 0.005 to 0.5 g/m$^2$ and more preferably 0.01 to 0.2 g/m$^2$. When the coating amount of the second coating layer is less than 0.002 g/m$^2$, the resulting second coating layer tends to fail to exhibit a sufficient adhesion property. When the coating amount of the second coating layer is more than 1.0 g/m$^2$, the resulting second coating layer tends to be deteriorated in appearance and transparency.

In the present invention, as the method of forming the first coating layer and the second coating layer, there may be used conventionally known coating methods such as a reverse gravure coating method, a direct gravure coating method, a roll coating method, a die coating method, a bar coating method and a curtain coating method.

In the present invention, the drying and curing conditions used upon forming the first coating layer and the second coating layer on the polyester film are not particularly limited. The first coating layer and the second coating layer may be subjected to heat treatment usually at a temperature of 70 to 280°C for 3 to 200 sec.

Further, the heat treatment may be used in combination with irradiation with active energy rays such as irradiation with ultraviolet rays, if required. The polyester film constituting the laminated polyester film of the present invention may be previously subjected to surface treatments such as corona treatment and plasma treatment.

The laminated polyester film according to the present invention preferably has a high total light transmittance from the standpoint of enhancing a brightness thereof. The total light transmittance of the laminated polyester film may vary owing to influence of the second coating layer and therefore is not particularly limited, and is preferably not less than 90.0%, more preferably not less than 91.0% and still more preferably not less than 91.5%.

The haze of the laminated polyester film according to the present invention is preferably in the range of 1.0 to 10% and more preferably 1.5 to 5.0%. When the haze of the laminated polyester film is excessively low, the luminescent line emitted from a backlight unit in which the laminated polyester film is incorporated tends to become excessively noticeable. When the haze of the laminated polyester film is excessively high, the resulting laminated polyester film tends to be deteriorated in light transmittance, which tends to cause deterioration in brightness.

The second coating layer of the laminated polyester film according to the present invention may be generally provided thereon with a prism layer, a micro-lens layer, a light diffusion layer or the like in order to improve a brightness of the film, etc. In recent years, in order to efficiently enhance a brightness of films, there have been proposed prism layers having various shapes. In general, the prism layers have plural rows of prisms each having a triangular sectional shape which are arranged in parallel with each other. Also, there have been proposed micro-lens layers having various shapes. In general, the micro-lens layers have a structure in which a number of semispherical convex lenses are provided on a film. The light diffusion layer serves for uniformly diffusing transmitted light in multiple directions, etc., and comprises particles and a binder. The prism layer, the micro-lens layer and the light diffusion layer may respectively have any conventionally known shapes.

The prism layer may have, for example, such a shape in which a thickness of the layer is 10 to 500 $\mu$m, rows of prisms have a pitch of 10 to 500 $\mu$m, and respective prisms have a triangular sectional shape having an apex angle of 40° to 100°. As the material of the prism layer, there may be used conventionally known materials. Examples of the material of the prism layer include active energy ray-curable resins, more specifically, polyester resins, epoxy resins, and (meth)acrylate-based resins such as polyester (meth)acrylates, epoxy (meth)acrylates and urethane (meth)acrylates.

The micro-lens layer may have, for example, such a shape in which a thickness of the layer is 10 to 500 $\mu$m, and respective lenses have a semispherical shape having a diameter of 10 to 500 $\mu$m. The shape of each lens of the micro-lens layer may also be a conical shape or a pyramidal shape. As the material of the micro-lens layer, conventionally known materials may be used therefor similarly to the prism layer. Examples of the material of the micro-lens layer include active energy ray-curable resins.

As the particles incorporated in the light diffusion layer, there may be used those particles having properties capable of diffusing light therein. Examples of the particles include organic particles of acrylic resins, acrylic urethane resins, urethane resins, polyester resins, polyvinyl resins, etc., and inorganic particles of silica, metal oxides, barium sulfate, etc. Among these particles, acrylic resins and acrylic urethane resins are preferably used because of a good transparency thereof. The particle diameter of these particles is not particularly limited, and an average particle diameter thereof is preferably 1 to 50 $\mu$m and more preferably 5 to 15 $\mu$m.

The binder incorporated in the light diffusion layer is used for fixing the particles therein and allowing the light diffusion layer to exhibit a light diffusion property. Examples of the binder include polyester resins, acrylic resins, polyurethane resins, fluororesins, silicone-based resins, epoxy resins and ultraviolet-curable resins. Also, in view of a good processability, polyol compounds can be suitably used as the binder. Examples of the polyol compounds include acrylic polyols and polyester polyols.

When the polyol compounds are used as the binder, an isocyanate is suitably used as a curing agent. When incorporating the isocyanate into the binder, it is possible to form a much stronger crosslinked structure, resulting in improved properties of the light diffusion layer. In addition, when the ultraviolet-curable resin is used as the binder, the resin is preferably an acrylic resin, so that the resulting light diffusion layer can be enhanced in hardness thereof.

The light diffusion layer may also comprise various additives such as a surfactant, a microfine inorganic filler, a plasticizer, a curing agent, an antioxidant, an ultraviolet absorber and a rust preventive agent unless the inherent light diffusion property of the light diffusion layer is adversely affected by addition thereof.

The mixing ratio between the binder and the particles in the light diffusion layer may be appropriately determined according to the aimed light diffusion property of the light diffusion layer. For example, the weight ratio of the binder to the particles [binder/particles] is in the range of 0.1 to 50 and preferably 0.5 to 20 although not particularly limited thereto.

As the method of forming the light diffusion layer, there may be used the method in which a coating solution comprising the binder and the particles is prepared and then applied and dried. Examples of the coating method include conventionally known coating methods such as a reverse gravure coating method, a direct gravure coating method, a roll coating method, a die coating method, a bar coating method, a curtain coating method, a spray coating method and a spin coating method. The thickness of the light diffusion layer is not particularly limited, and is in the range of 1 to 100 $\mu$m and preferably 3 to 30 $\mu$m in view of a good light diffusion property and a high film strength of the resulting layer, etc.

## EXAMPLES

The present invention is described in more detail below by Examples. However, these Examples are only illustrative and not intended to limit the present invention thereto, and other changes or modifications may be possible and involved in the scope of the present invention unless departing from the subject matter of the present invention. In addition, the measuring and evaluating methods used in the present invention are as follows.

### (1) Measurement of intrinsic viscosity of polyester:

One gram of a polyester from which the other polymer components incompatible with the polyester and pigments were previously removed was accurately weighed, and mixed with and dissolved in 100 mL of a mixed solvent comprising phenol and tetrachloroethane at a weight ratio of 50:50, and a viscosity of the resulting solution was measured at 30°C.

### (2) Measurement of average particle diameter:

The surface of the coating layer was observed using an electron microscope "S-4500" manufactured by Hitachi Ltd., to measure particle diameters of the 10 particles therein. The average value of the thus measured particle diameters was determined as an average particle diameter.

### (3) Measurement of variation in height:

The surface of the first coating layer was observed using a laser microscope "OLS-3000" manufactured by OLYMPUS Corp., with an objective lens having a magnification of x 100 times to measure a variation in height between a crest and a trough on the surface of the first coating layer by step-measuring analysis.

(4) Measurement of total light transmittance:

The total light transmittance was measured using a haze meter "HM-150" manufactured by Murakami Color Research Laboratory Co., Ltd., according to JIS K 7361.

(5) Measurement of haze:

The haze was measured using a haze meter "HM-150" manufactured by Murakami Color Research Laboratory Co., Ltd., according to JIS K 7136.

(6) Method of measuring a surface resistivity of a laminated polyester film:

Using a high-resistance meter "HP-4339B" and a measuring electrode "HP16008B" both manufactured by Hewlett Packard Japan Limited, the laminated polyester film was sufficiently conditioned in a measuring atmosphere of 23°C and 50% RH, and then a voltage of 100 V is applied thereto for 1 min. Thereafter, the surface resistivity of the coating layer of the laminated polyester film was measured.

(7) Method of evaluating deposition of dusts on a laminated polyester film:

After the laminated polyester film was sufficiently conditioned in a measuring atmosphere of 23°C and 50% RH, the coating layer of the laminated polyester film was rubbed with a cotton cloth by reciprocating the cloth thereover ten times. Then, the coating layer was slowly approached to finely crushed tobacco ash to examine and evaluate the condition of deposition of the ash on the coating layer according to the following ratings.

A: No deposition of ash occurred even when approaching the film to ash.
B: Deposition of a slight amount of ash occurred when approaching the film to ash.
C: Deposition of a considerable amount of ash occurred only when approaching the film to ash.

(8) Method of evaluating an abrasion resistance:

A prism sheet was overlapped on a surface of the first coating layer, and a weight of 200 g was rested on the prism sheet. Then, the prism sheet was slidingly moved to observe a surface of the first coating layer. The observation results were evaluated according to the following ratings.

A: No flaw was recognized on the surface of the coating layer.
C: Severe flaw was recognized on the surface of the coating layer.

(9) Method of evaluating a slip property:

The surface of the first coating layer was rubbed with nails to evaluate a slip property thereof according to the following ratings.

A: Good slip feel without scratch feel.
B: No scratch feel nor slip feel.
C: Severe scratch feel.

(10) Method for evaluating an adhesion property of a second coating layer to a prism layer:

A resin "KAYARAD DPHA-40H" as an active energy-curable resin composition produced by Nippon Kayaku Co., Ltd., was placed in a mold for forming a prism layer in which plural rows of prism-shaped mold cavities each having an apex angle of 65° were arranged with a pitch of 50 $\mu$m in parallel with each other. Then, the laminated polyester film was overlapped on the resin in the mold such that the second coating layer of the laminated polyester film came into contact with the resin. The active energy ray-curable resin composition was uniformly spread using a roller, and then an ultraviolet ray was irradiated thereover using an ultraviolet irradiation apparatus to cure the resin. Next, the resulting film was released from the mold to obtain a laminated film on which the prism layer was formed. Immediately after obtaining the laminated film, the surface of the laminated film was cut using a cutter knife to form flaws at intervals of 5 mm, and then a 24 mm-wide tape ("Cellotape (registered trademark) CT-24" produced by Nichiban Co., Ltd.) was attached onto the cut surface of the film, and then rapidly peeled off therefrom at a peel angle of 180°. Then, the surface

of the laminated film from which the tape was peeled off was observed to measure an area of the layer peeled. The evaluation ratings are as follows.

A: Peeled area of the layer was not more than 10%.
B: Peeled area of the layer was more than 10% and not more than 20%.
C: Peeled area of the layer was more than 20%.

The polyesters used in the respective Examples and Comparative Examples were prepared by the following methods.

<Method for producing polyester (A)>

One hundred parts by weight of dimethyl terephthalate and 60 parts by weight of ethylene glycol as starting materials were charged together with tetrabutoxytitanate as a catalyst into a reaction vessel, and the reaction therebetween was initiated at 150°C. The reaction temperature was gradually raised while distilling off methanol as produced, and allowed to reach 230°C after 3 hr. After 4 hr, the transesterification reaction was substantially terminated, and then the resulting product was subjected to polycondensation reaction for 4 hr.

More specifically, the reaction temperature was gradually raised from 230°C until reaching 280°C. On the other hand, the reaction pressure was gradually reduced from normal pressures until finally reaching 0.3 mmHg. After initiation of the reaction, the change in agitation power in the reaction vessel was monitored, and the reaction was terminated at the time at which a viscosity of the reaction solution reached the value corresponding to an intrinsic viscosity of 0.63 on the basis of the change in agitation power in the reaction vessel. The resulting polymer was discharged under application of a nitrogen pressure from the reaction vessel, thereby obtaining a polyester (A) having an intrinsic viscosity of 0.63.

<Method for producing polyester (B)>

One hundred parts by weight of dimethyl terephthalate and 60 parts by weight of ethylene glycol as starting materials were charged together with magnesium acetate tetrahydrate as a catalyst into a reaction vessel, and the reaction therebetween was initiated at 150°C. The reaction temperature was gradually raised while distilling off methanol as produced, and allowed to reach 230°C after 3 hr. After 4 hr, the transesterification reaction was substantially terminated. The obtained reaction mixture was transferred to a polycondensation reaction vessel, and mixed with orthophosphoric acid and then with germanium dioxide, followed by subjecting the resulting mixture to polycondensation reaction for 4 hr. More specifically, the reaction temperature was gradually raised from 230°C until reaching 280°C. On the other hand, the reaction pressure was gradually reduced from normal pressure until finally reaching 0.3 mmHg. After initiation of the reaction, the change in agitation power in the reaction vessel was monitored, and the reaction was terminated at the time at which a viscosity of the reaction solution reached the value corresponding to an intrinsic viscosity of 0.65 on the basis of the change in agitation power in the reaction vessel. The resulting polymer was discharged under application of a nitrogen pressure from the reaction vessel, thereby obtaining a polyester (B) having an intrinsic viscosity of 0.65.

<Method for producing polyester (C)>

The same procedure as defined in the above method for producing the polyester (A) was conducted except that silica particles having an average particle diameter of 2 $\mu$m in the form of a dispersion in ethylene glycol were added in an amount of 0.2 part, and the polycondensation reaction was terminated at the time at which a viscosity of the reaction solution reached the value corresponding to an intrinsic viscosity of 0.66, thereby obtaining a polyester (C) having an intrinsic viscosity of 0.66.

The compounds constituting the coating layers are as follows.

(Examples of compounds)

• Antistatic agent: (I)

Polymer comprising a pyrrolidinium ring in a main chain thereof which was obtained by polymerizing the following composition:

Diallyl dimethyl ammonium chloride/dimethyl acrylamide/N-methylol acrylamide = 90/5/5 (mol%)

Number-average molecular weight: about 30000

• Acrylic resin: (IIA)

Acrylic resin produced by dispersing a copolymer of an acrylic acid alkyl ester and a methacrylic acid alkyl ester using a nonionic emulsifying agent ("NIKASOL" produced by Nippon Carbide Industries Co., Inc.)

• Urethane resin: (IIB)

Water dispersion of a urethane resin which was obtained by neutralizing a prepolymer produced from 400 parts of a polycarbonate polyol having a number-average molecular weight of 2000 which was obtained from 1,6-hexanediol and diethyl carbonate, 10.4 parts of neopentyl glycol, 58.4 parts of isophorone diisocyanate and 74.3 parts of dimethylol butanoic acid with triethylamine, and then subjecting the neutralized product to chain extension reaction using isophorone diamine.

• Releasing agent: (III)

Wax emulsion obtained by the following method. That is, a 1.5 L-capacity emulsification facility equipped with a stirrer, a thermometer and a temperature controller was charged with 300 g of a polyethyleneoxide wax having a melting point of 105°C, an acid value of 16 mg KOH/g, a density of 0.93 g/mL and an average molecular weight of 5000, 650 g of ion-exchanged water, 50 g of decaglycerin monooleate as a surfactant and 10 g of a 48% potassium hydroxide aqueous solution, and an inside atmosphere of the facility was replaced with nitrogen and then sealed, followed by subjecting the contents of the facility to highspeed stirring at 150°C for 1 h and cooling the resulting mixture to 130°C. The obtained mixture was then passed through a high-pressure homogenizer under a pressure of 400 atm and then cooled to 40°C to thereby obtain the wax emulsion.

• Crosslinking agent (oxazoline compound): (IV)

Polymer-type crosslinking agent "EPOCROSS WS-500" (produced by Nippon Shokubai Co., Ltd.) in which an oxazoline group was bonded as a branched chain to an acrylic resin.

• Binder polymer: (V)

Adduct of polyethyleneoxide to a polyglycerol skeleton; average molecular weight: 350.

• Particles: (VI)

Silica particles having an average particle diameter of 0.07 $\mu$m.

Example 1:

A mixed raw material obtained by mixing the polyesters (A), (B) and (C) in amounts of 85%, 5% and 10%, respectively, as a raw material for outermost layers (surface layers), and a mixed raw material obtained by mixing the polyesters (A) and (B) in amounts of 95% and 5%, respectively, as a raw material for an intermediate layer, were respectively charged into two extruders, melted therein at 290°C, and then co-extruded therefrom on a cooling roll whose surface was controlled to a temperature of 40°C to form a sheet having a two-kind/three-layer structure (surface layer/intermediate layer/surface layer = extrusion ratio: 1:18:1), followed by cooling and solidifying the thus extruded sheet on the cooling roll, thereby obtaining an unstretched sheet. Next, the thus obtained unstretched sheet was stretched utilizing a difference between peripheral speeds of rolls at 85°C and a stretch ratio of 3.4 times in a longitudinal direction thereof. Thereafter, a coating solution 1 shown in the below-mentioned Table 1 was applied on one surface of the thus obtained longitudinally stretched sheet such that a coating amount thereof after dried was 0.09 g/$m^2$, and a coating solution 10 was applied on the other surface of the sheet such that a coating amount thereof after dried was 0.03 g/$m^2$. Then, the resulting coated sheet was introduced into a tenter where the sheet was stretched at 120°C and a stretch ratio

of 4.0 times in a lateral direction thereof and then heat-treated at 225°C, thereby obtaining a polyester film having a thickness of 188 $\mu$m.

As a result, it was confirmed that the thus obtained polyester film has a low surface resistivity, and the first coating layer had a good abrasion resistance and a good slip property. Various properties of the thus obtained film are shown in Table 2 below.

Examples 2 to 6:

The same procedure as defined in Example 1 was conducted except that the coating agent composition was changed to those shown in Table 1, thereby obtaining polyester films. Various properties of the thus obtained polyester films are shown in Table 2.

Comparative Example 1:

The same procedure as defined in Example 1 was conducted except that no first coating layer was provided, thereby obtaining a polyester film. As a result, it was confirmed that the thus obtained polyester film exhibited a low total light transmittance and was deteriorated in abrasion resistance and slip property.

Comparative Examples 2 and 3:

The same procedure as defined in Example 1 was conducted except that the coating agent composition was changed to those shown in Table 1, thereby obtaining polyester films. As a result, it was confirmed that the thus obtained polyester films were deteriorated in dust deposition property, abrasion resistance or slip property.

Comparative Example 4:

The same procedure as defined in Example 4 was conducted except that no second coating layer was provided, thereby obtaining a polyester film. As a result, it was confirmed that the thus obtained polyester film was deteriorated in adhesion property to the prism layer.

Table 1

| Coating solutions | Coating agent composition (wt%) | | | | | | |
|---|---|---|---|---|---|---|---|
| | I | IIA | IIB | III | IV | V | VI |
| Coating solution 1 | 30 | 45 | 0 | 5 | 10 | 10 | 0 |
| Coating solution 2 | 30 | 60 | 0 | 0 | 10 | 0 | 0 |
| Coating solution 3 | 30 | 57 | 0 | 3 | 10 | 0 | 0 |
| Coating solution 4 | 30 | 55 | 0 | 5 | 10 | 0 | 0 |
| Coating solution 5 | 30 | 50 | 0 | 10 | 10 | 0 | 0 |
| Coating solution 6 | 30 | 45 | 0 | 5 | 20 | 0 | 0 |
| Coating solution 7 | 20 | 55 | 0 | 5 | 20 | 0 | 0 |
| Coating solution 8 | 0 | 90 | 0 | 0 | 10 | 0 | 0 |
| Coating solution 9 | 30 | 50 | 0 | 0 | 0 | 20 | 0 |
| Coating solution 10 | 0 | 0 | 60 | 0 | 35 | 0 | 5 |

Table 2

| Examples and Comparative Examples | Coating solution for first coating layer | Coating solution for second coating layer | Variation in height ($\mu$m) |
|---|---|---|---|
| Example 1 | 1 | 10 | 0.05 |

(continued)

| Examples and Comparative Examples | Coating solution for first coating layer | Coating solution for second coating layer | Variation in height ($\mu$m) | |
|---|---|---|---|---|
| Example 2 | 2 | 10 | 0.07 | |
| Example 3 | 3 | 10 | 0.07 | |
| Example 4 | 4 | 10 | 0.09 | |
| Example 5 | 5 | 10 | 0.11 | |
| Example 6 | 6 | 10 | 0.18 | |
| Example 7 | 7 | 10 | 0.08 | |
| Comparative Example 1 | None | 10 | 0.01 | |
| Comparative Example 2 | 8 | 10 | 0.01 | |
| Comparative Example 3 | 9 | 10 | 0.03 | |
| Comparative Example 4 | 3 | None | 0.09 | |
| Examples and Comparative Examples | Total light transmittance (%) | Haze (%) | Surface resistivity ($\Omega$) | |
| Example 1 | 91.9 | 2.1 | $1x10^9$ | |
| Example 2 | 91.8 | 3.0 | $2x10^9$ | |
| Example 3 | 91.8 | 3.2 | $2x10^9$ | |
| Example 4 | 91.7 | 3.5 | $2x10^9$ | |
| Example 5 | 91.6 | 3.8 | $2x10^9$ | |
| Example 6 | 91.1 | 5.3 | $2x10^9$ | |
| Example 7 | 91.7 | 3.3 | $8x10^{10}$ | |
| Comparative Example 1 | 89.0 | 1.1 | $2x10^{15}$ | |
| Comparative Example 2 | 92.1 | 1.2 | $1x10^{15}$ | |
| Comparative Example 3 | 92.1 | 1.2 | $6x10^8$ | |
| Comparative Example 4 | 91.4 | 3.3 | $2x10^9$ | |
| Examples and Comparative Examples | Dust deposition property | Abrasion resistance | Slip property | Adhesion to prism layer |
| Example 1 | A | A | A | A |
| Example 2 | A | A | B | A |
| Example 3 | A | A | A | A |
| Example 4 | A | A | A | A |
| Example 5 | A | A | A | A |

(continued)

| Examples and Comparative Examples | Dust deposition property | Abrasion resistance | Slip property | Adhesion to prism layer |
|---|---|---|---|---|
| Example 6 | A | A | A | A |
| Example 7 | A | A | A | A |
| Comparative Example 1 | C | C | C | A |
| Comparative Example 2 | C | C | C | A |
| Comparative Example 3 | A | C | C | A |
| Comparative Example 4 | A | A | A | C |

INDUSTRIAL APPLICABILITY

The film of the present invention can be suitably used in the applications in which good easy-slip property, antisticking property and antistatic property are required, such as, for example, a member for a micro-lens sheet, a prism sheet, a light diffusion sheet, a touch panel, etc., which are employed in a backlight unit of liquid crystal displays, etc.

## Claims

1. A laminated polyester film comprising:

   a polyester film,
   a first coating layer formed on one surface of the polyester film which comprises a resin and an antistatic agent of a polymer type but comprises substantially no particles, as described in the description, and has a variation in height of not less than 0.04 μm as measured over the coating layer by using a laser microscope "OLS-3000" manufactured by OLYMPUS Corp., with an objective lens having a magnification of x 100 times to measure a variation in height between a crest and a trough on the surface of the first coating layer by step-measuring analysis, and
   a second coating layer formed on the other surface of the polyester film which comprises a resin,
   wherein the antistatic agent of a polymer type is a quaternary ammonium salt having a number-average molecular weight of 1,000 to 500,000,
   and wherein the first coating layer and the second coating layer respectively comprise a crosslinking agent.

2. A laminated polyester film according to claim 1, wherein the resin contained in each of the first coating layer and the second coating layer is any one of resin selected from the group consisting of a polyester resin, an acrylic resin and a urethane resin.

3. A laminated polyester film according to claim 1 or 2, wherein a content of the resin in the first coating layer is 10 to 80% by weight, and a content of the resin in the second coating layer is 20 to 90% by weight.

4. A laminated polyester film according to any one of claims 1 to 3, wherein the first coating layer comprises a releasing agent.

5. A laminated polyester film according to claim 4, wherein a content of the releasing agent in the first coating layer is not more than 50% by weight.

6. A laminated polyester film according to claim 1, wherein a content of the crosslinking agent in the first coating layer is 1 to 50% by weight, and a content of the crosslinking agent in the second coating layer is 5 to 70% by weight.

## Patentansprüche

**1.** Laminierte Polyesterfolie, umfassend:

eine Polyesterfolie,
eine erste Überzugsschicht, gebildet auf einer Seite der Polyesterfolie, welche ein Harz und ein antistatisches Mittel von einem Polymertyp umfasst, jedoch im Wesentlichen keine Teilchen umfasst, wie in der Beschreibung ausgeführt, und eine Variation in der Höhe von nicht weniger als 0,04 μm aufweist, wie gemessen über der Überzugsschicht unter Verwendung eines Lasermikroskops "OLS-3000", hergestellt von OLYMPUS Corp., mit einer Objektivlinse mit einer Vergrößerung von x 100-fach, um eine Variation in der Höhe zwischen einem Berg und einem Tal auf der Oberfläche der ersten Überzugsschicht durch Stufen-Messanalyse zu messen, und
eine zweite Überzugsschicht, gebildet auf der anderen Seite der Polyesterfolie, welche ein Harz umfasst,
wobei das antistatische Mittel von einem Polymertyp ein quaternäres Ammoniumsalz mit einem zahlenmittleren Molekulargewicht von 1.000 bis 500.000 ist,
und wobei die erste Überzugsschicht und die zweite Überzugsschicht jeweils ein Vernetzungsmittel umfassen.

**2.** Laminierte Polyesterfolie nach Anspruch 1, wobei das in jeder der ersten Überzugsschicht und der zweiten Überzugsschicht enthaltene Harz irgendein Harz ist, gewählt aus der Gruppe, bestehend aus einem Polyesterharz, einem Acrylharz und einem Urethanharz.

**3.** Laminierte Polyesterfolie nach Anspruch 1 oder 2, wobei ein Gehalt des Harzes in der ersten Überzugsschicht 10 bis 80 Gew.-% beträgt, und ein Gehalt des Harzes in der zweiten Überzugsschicht 20 bis 90 Gew.-% beträgt.

**4.** Laminierte Polyesterfolie nach irgendeinem der Ansprüche 1 bis 3, wobei die erste Überzugsschicht ein Trennmittel umfasst.

**5.** Laminierte Polyesterfolie nach Anspruch 4, wobei ein Gehalt des Trennmittels in der ersten Überzugsschicht nicht mehr als 50 Gew.-% beträgt.

**6.** Laminierte Polyesterfolie nach Anspruch 1, wobei ein Gehalt des Vernetzungsmittels in der ersten Überzugsschicht 1 bis 50 Gew.-% beträgt, und ein Gehalt des Vernetzungsmittels in der zweiten Überzugsschicht 5 bis 70 Gew.-% beträgt.

## Revendications

**1.** Un film de polyester stratifié comprenant:

un film de polyester,
une première couche de revêtement formée sur une surface du film de polyester qui comprend une résine et un agent antistatique de type polymère, mais qui ne comprend pratiquement pas de particules, tel que décrit dans la description, et qui a une variation dans la hauteur d'au moins 0,04 μm tel que mesuré au-dessus de la couche de revêtement en utilisant un microscope au laser « OLS-3000 » manufacturé par la société OLYMPUS, avec une lentille de focalisation ayant une magnification de x 100 fois pour mesurer un variation dans la hauteur entre une crête et une vallée sur la surface de la première couche de revêtement par analyse de mesurage en étapes, et
une seconde couche de revêtement formée sur l'autre surface du film de polyester qui comprend une résine,
dans lequel l'agent antistatique de type polymère est un sel d'ammonium quaternaire ayant un poids moléculaire moyen en poids de 1.000 à 500.000, et
dans lequel la première couche de revêtement et la seconde couche de revêtement respectivement comprennent un agent de réticulation.

**2.** Un film de polyester stratifié selon la revendication 1, dans lequel la résine contenue dans chacune de la première couche de revêtement et de la seconde couche de revêtement est l'une quelconque de la résine choisie parmi le groupe constitué d'une résine de polyester, d'une résine acrylique et d'une résine d'uréthane.

**3.** Un film de polyester stratifié selon la revendication 1 ou 2, dans lequel la teneur de la résine dans la première couche de revêtement est de 10 à 80% en poids, et la teneur de la résine dans la seconde couche de revêtement est de

20 à 90% en poids.

4. Un film de polyester stratifié selon l'une quelconque des revendications 1 à 3, dans lequel la première couche de revêtement comprend un agent de démoulage.

5. Un film de polyester stratifié selon la revendication 4, dans lequel la teneur de l'agent de démoulage dans la première couche de revêtement n'est pas supérieure à 50% en poids.

6. Un film de polyester stratifié selon la revendication 1, dans lequel la teneur de l'agent de réticulation dans la première couche de revêtement est de 1 à 50% en poids et la teneur de l'agent de réticulation dans la seconde couche de revêtement est de 5 à 70% en poids.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004004598 A
- JP 2007286166 A
- JP 59005216 A
- JP 59217755 A
- JP 2005082784 A